# EUROPEAN PATENT SPECIFICATION

(11) **EP 4 545 390 B1**
(45) Date of publication and mention of the grant of the patent: **24.12.2025**
(21) Application number: 23205681.2
(22) Date of filing: 25.10.2023
(51) Int. Cl.: B62K 5/02, B62K 7/02, B60P 1/48

(54) **CARGO BIKE**
FRACHTFAHRRAD
BICYCLETTE CARGO

(43) Date of publication of application: 30.04.2025
(73) Proprietor: VOLVO TRUCK CORPORATION, 405 08 Göteborg (SE)
(72) Inventor: COURTENS, Fabrice, 69300 Caluire et cuire (FR)
(74) Representative: Germain Maureau

(56) References cited:
- WO-A1-2021/209557
- CN-U- 207 683 685
- ES-A1- 2 277 747
- ES-U- 1 232 734
- FR-A1- 2 977 229
- US-A1- 2020 307 733

## Description

### TECHNICAL FIELD

The disclosure relates generally to the distribution of containers by a vehicle and, more particularly, by a cargo bike. In particular aspects, the disclosure relates to a cargo bike allowing a distribution of a pick-up box. Although the disclosure may be described with respect to a cargo bike, the disclosure is not restricted to any particular vehicle.

### BACKGROUND

FR 2 977 229 A1 discloses the preamble of claim 1. The invention applies to distribution of items ordered by users, in particular urban users living in a city. The items are usually collected at a warehouse outside the city before being delivered by distribution vehicles from different companies to the user individually or via a retail outlet, such as a supermarket or shop.

For this purpose, delivery systems implementing containers such as a pick-up box with a plurality of compartments each configured to accommodate at least one of the items are known. In particular, the content of container is prepared according to the orders of the users and temporary placed on a ground surface where the users may pick-up their article.

Last-mile delivery has developed rapidly in recent years. One of the main problems is congestion due to the number of light and heavy vehicles delivering goods, but the worst problem is the time spent unloading, usually in poor parking conditions, having to open the rear doors of a truck, deploy a tail lift and use a pallet truck.

Given the various constraints of urban delivery and the difficulties of recharging electric vehicles, the cargo bike seems to offer a sustainable solution for absorbing the growth in last-mile deliveries due in particular to the expansion in e-commerce. Cargo bikes, especially electrically-assisted cargo bikes, are developing rapidly, initially in cycle logistics start-ups specializing in urban deliveries, but also increasingly with traditional haulage companies and vehicle rental companies.

An electrically-assisted cargo bike has a number of advantages. It emits no CO₂ or particulates, so it is not subject to access restrictions in city centers. It can carry up to 300 kg of load, including temperature-controlled goods, thanks to a range of equipment including luggage racks and tow bars.

It is manoeuvrable enough to access any road, delivering to the nearest recipient even in streets or alleyways that are off-limits or inaccessible to trucks. The integrated, low-power electric motor helps the delivery to bear the weight of the device, but does not require long charging times for the batteries, which can even be recharged when pedaling or braking.

The main problem is therefore loading, transporting and unloading goods when trucks are not allowed or when it is more convenient to use bicycles. However, using a conventional cargo bike does not allow customers to load and unload goods easily.

### SUMMARY

The invention aims at solving the above problems.

According to a first aspect of the disclosure, a cargo bike, with a longitudinal orientation, comprises:
- a driver area, which is positioned in front of the cargo bike in regard to the direction of travel of the cargo bike,
- a container for carrying articles,
- a pick-up area intended to accommodate said container, the pick-up area being positioned to the rear of the driver area, the container being operated by a tilting device that is configured to tilt the container longitudinally between a first end position in which the container is located in the pick-up area and a second end position in which the container is located to the rear of the pick-up area, and
- a system for fastening the container to the tilting device, said fastening system comprising two U-shaped rails arranged at an upper end of the container.

A first aspect of the disclosure may seek to provide a cargo bike which allows goods to be loaded and unloaded easily, without the need to use a forklift. Due to the specific fastening system, the container can be easily and securely fastened to the tilting device.

In some examples, the tilting device comprises two pivoting arms located laterally on either side of the cargo bike and mounted so as to rotate relative to a frame of the cargo bike, each pivoting arm being driven in rotation by an actuator.

In some examples, the pivoting arms are rotatably mounted at the rear of the pick-up area and said actuator is a hydraulic cylinder comprising a cylinder tube in which moves a piston connected to a rod, the cylinder tube being mounted so as to rotate relative to the frame, the rod being mounted so as to rotate relative to the pivoting arm driven in rotation by said actuator. Alternatively, an electric cylinder could be used.

In some examples, each pivoting arm includes three parts, namely a lower part, a middle part and an upper part, the lower part extending between a lower end which is mounted to rotate relative to the frame, and an upper end around which is mounted to rotate one end of the rod of the hydraulic cylinder, the middle part extending between a lower end which coincides with the upper end of the lower part and an upper end located at the level of the U-shaped rails, and the upper part extending between a lower end which coincides with the upper end of the middle part and an upper end located above the U-shaped rails.

In some examples, the lower part has a first inclination relative to the frame, the middle part has a second inclination relative to the frame that is higher than the first inclination, and the upper part has a third inclination relative to the frame that is higher than the second inclination.

In some examples, each U-shaped rail has a base and two side walls orthogonal to the base, one rail being attached to each lateral end of the upper end of the container, via a side wall of the U-shaped rail extending along the upper end the container, and each U-shaped rail is positioned so that the side walls of the rail extend from the base of the rail and towards the exterior of the cargo bike.

In some examples, the fastening system comprises at each longitudinal end of each U-shaped rail a fastening element housed inside the rail, each fastening element being connected via a connecting element to an upper part of a pivoting arm, the upper part of the pivoting arm being located above the rail.

In some examples, each fastening element comprises a transverse wing, which is intended to act as a longitudinal stop against the base of a U-shaped rail.

In some examples, the fastening system comprises at a rear end of the U-shaped rails two fastening elements connected transversely to each other by a transverse rod and the fastening system comprises at a front end of the U-shaped rails two fastening elements connected transversely to each other by a transverse rod.

In some examples, each connecting element comprises a chain.

In some examples, each chain is connected on the one hand, via for example a first hooking element, to one hooking element mounted on an end of a transverse rod, and on the other hand, via for example a second hooking element, to the upper part of a pivoting arm. The second hooking elements can be hooked onto a loop (for example an oblong ring) which is freely mounted around a transverse rod of the upper part of the pivoting arm.

In some examples, the fastening system comprises, projecting from each U-shaped rail, a transverse rod around which a pivoting arm is rotatably mounted.

In some examples, each transverse rod of the fastening system projects from a longitudinal rod which is supported at each longitudinal end of the rail by two fastening elements housed in the rail.

In some examples, each fastening element comprises a transverse wing which is intended to act as a longitudinal stop against the U-shaped rail.

In some examples, each transverse rod is provided with a pin.

In some examples, the cargo bike also comprises retractable feet positioned at the rear of the pick-up area. The retractable feet can be operated electrically, manually or hydraulically.

In some examples, the cargo bike is a three-wheeler with one front wheel and two rear wheels.

According to a second aspect of the disclosure, a method for loading/unloading a container implements the cargo bike described above.

In some examples, the method comprises:
- tilting the container longitudinally between a position in which the container is located in the pick-up area and a position in which the container is located to the rear of the pick-up area, and/or
- tilting the container longitudinally between a position in which the container is located to the rear of the pick-up area and a position in which the container is located in the pick-up area.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a perspective view of a cargo bike of the invention according to one example,
**FIG. 2** is a side view of the cargo bike of **FIG. 1****,**
**FIG. 3** is a rear view of the cargo bike of **FIG. 1****,**
**FIG. 4** is a first detailed view of a tilting device of the cargo bike,
**FIG. 5** is a second detailed view of a tilting device of the cargo bike,
**FIG. 6** is a first detailed view of a fastening system of the cargo bike,
**FIG. 7** is a second detailed view of a fastening system of the cargo bike,
**FIG. 8** is a side view of the cargo bike, during a first step of unloading a container,
**FIG. 9** is a perspective view of the cargo bike of **FIG. 8****,**
**FIG. 10** is a side view of the cargo bike, during a second step of unloading a container,
**FIG. 11** is a perspective view of the cargo bike of **FIG. 10****,**
**FIG. 12** is a side view of the cargo bike, during a third step of unloading a container,
**FIG. 13** is a perspective view of the cargo bike of **FIG. 12****,**
**FIG. 14** is a side view of a container, during a first step of mounting the container on the tilting device,
**FIG. 15** is a perspective view of the container of **FIG. 14****,**
**FIG. 16** is a perspective view of the cargo bike, during a second step of mounting the container on the tilting device,
**FIG. 17** is a perspective view of the cargo bike, during a third step of mounting the container on the tilting device,
**FIG. 18** is a perspective view of the cargo bike, during a fourth step of mounting the container on the tilting device,
**FIG. 19** is a perspective view of a cargo bike of the invention according to another example,
**FIG. 20** is a first detailed view of a fastening system of the cargo bike of **FIG. 19****,**
**FIG. 21** is a second detailed view of a fastening system of the cargo bike of **FIG. 19****,**
**FIG. 22** is a side view of the cargo bike, during a first step of unloading a container,
**FIG. 23** is a perspective view of the cargo bike of **FIG. 22****,**
**FIG. 24** is a side view of the cargo bike, during a second step of unloading a container,
**FIG. 25** is a perspective view of the cargo bike of **FIG. 24****,**
**FIG. 26** is a side view of the cargo bike, during a third step of unloading a container,
**FIG. 27** is a perspective view of the cargo bike of **FIG. 26****,**
**FIG. 28** is a side view of the cargo bike, during a first step of mounting the container on the tilting device,
**FIG. 29** is a perspective view of the cargo bike of **FIG. 28****,**
**FIG. 30** is a rear view of the cargo bike, during a second step of mounting the container on the tilting device,
**FIG. 31** is a side view of the cargo bike, during a third step of mounting the container on the tilting device, and
**FIG. 32** is a perspective view of the cargo bike, during a third step of mounting the container on the tilting device.

### DETAILED DESCRIPTION

Aspects set forth below represent the necessary information to enable those skilled in the art to practice the disclosure.

The Figures show two examples of a cargo bike that is labelled with the reference 1 as a whole.

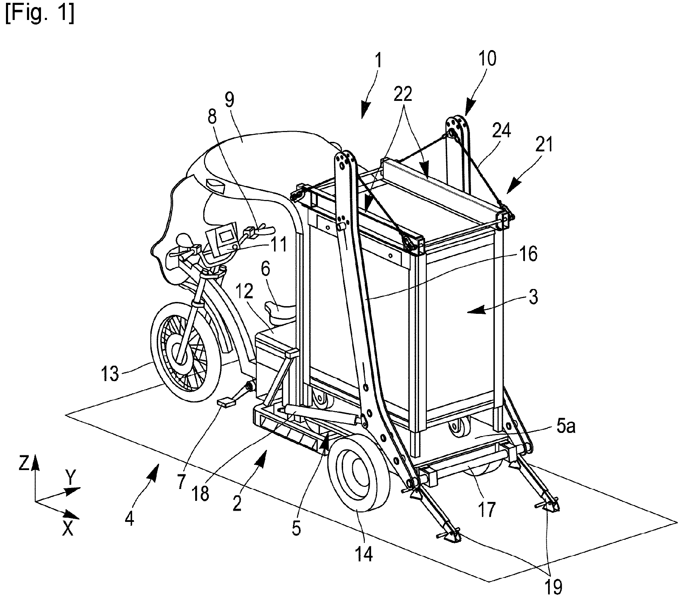

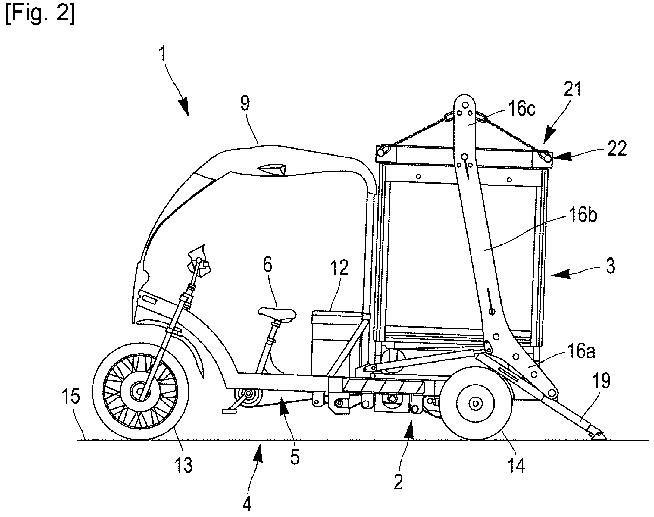

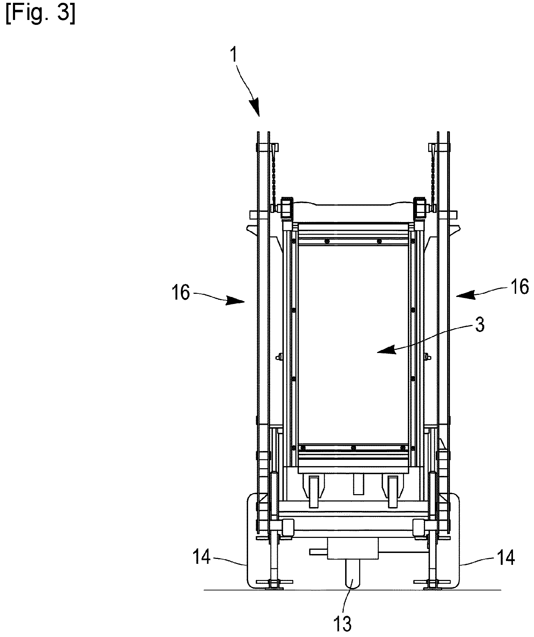

**FIG. 1** is a perspective view of a cargo bike 1 of the invention according to one example, **FIG. 2** is a side view of the cargo bike 1 of **FIG. 1****,** whereas **FIG. 3** is a rear view of the cargo bike 1 of **FIG. 1****.**

The cargo bike 1 extends generally in a longitudinal direction X. The spatial representation of the cargo bike 1 is supplemented by a transverse direction Y and a vertical direction Z. The cargo bike 1 can be driven using muscle power and/or an electric drive. Cargo bike 1 includes pick-up area 2 in which one container 3 is positioned, the container 3 being operated by a tilting device 10. The cargo bike 1 also advantageously comprises retractable feet 19 positioned at the rear of the pick-up area 2. The retractable feet 19 help maintain balance of the cargo bike 1 when the container 3 is tipped backwards by the tilting device 10.

Moreover, the cargo bike 1 includes a driver area 4 which is positioned in front of the pick-up area 2 in relation to the driving direction (i.e. the longitudinal direction) X of the cargo bike 1. A frame 5 supports the driver area 4 and the pick-up area 2.

In the driver area 4 there is a seat unit 6, a pedal unit 7, a steering unit 8, a roof element 9 over at least the driver area 4, a connected dashboard 11 and a battery box 12.

The cargo bike 1 can typically be a three-wheeler with one front wheel 13 and two rear wheels 14.

The tilting device 10 is intended to pivot the container 3 between a loading position and an unloading position. In the loading position, the container 3 is positioned on a floor 5a mounted on the frame 5, for example a wooden floor, whereas in the unloading position the container 3 is tipped on the ground 15, at the rear of the cargo bike 1.

The tilting device 10 comprises two pivoting arms 16 mounted so as to rotate around a transverse rod 17 located at the rear of the frame. The pivoting arms 16 thus cause a longitudinal tilting of the container 3 towards the rear of the cargo bike 1. A pivoting arm 16 is positioned laterally on each side of the container 3. Each arm 16 can be a double arm comprising two identical plates connected by transverse rods.

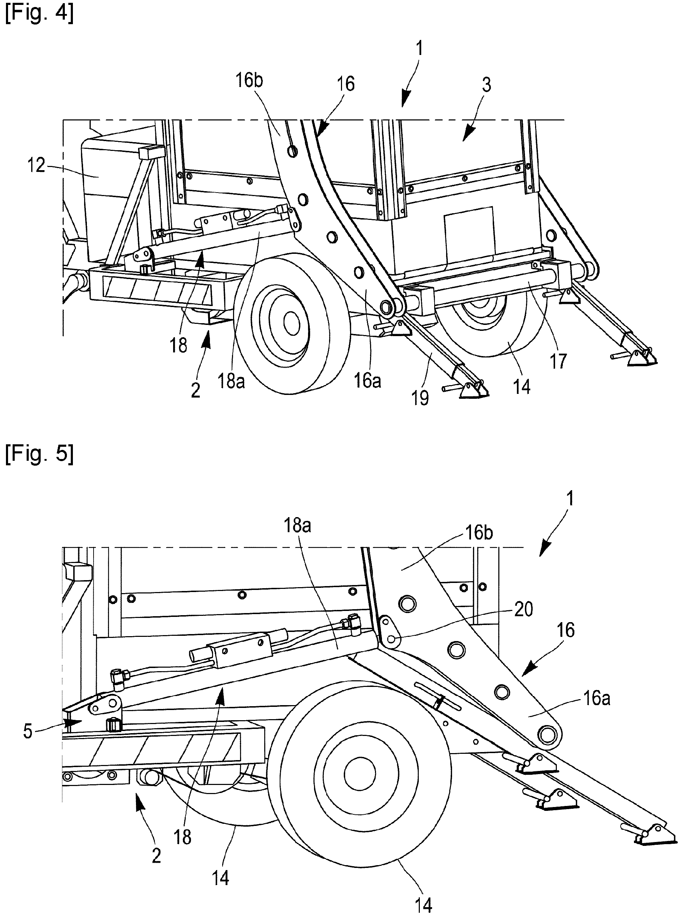

**FIG. 4** is a first detailed view of the tilting device 10 of the cargo bike 1, whereas **FIG. 5** is a second detailed view of the tilting device 10 of the cargo bike 1.

Each arm 16 is driven in rotation by an actuator 18 such as an electric cylinder or, as shown, such as a hydraulic cylinder. Each cylinder 18 is mounted on the frame at the rear of the driver area 4, notably at the junction between the driver area 4 and the pick-up area 2. The cylinder 18 is in particular mounted so as to rotate around a transversal axle of the frame 5. Each cylinder 18 comprises a cylinder tube 18a in which moves a piston connected to a rod 18b. The rod 18b is mounted so as to rotate around a transverse axle 20 of the pivoting arm 16.

Each pivoting arm 16 includes three parts, namely a lower part 16a, a middle part 16b and an upper part 16c, each part having a different inclination relative to the frame 5. The lower part 16a extends between a lower end which is mounted to rotate relative to the frame 5, around the transverse rod 17, and an upper end around which is mounted to rotate one end of the rod 18b of the hydraulic cylinder 18. The middle part 16b extends between a lower end which coincides with the upper end of the lower part 16a and an upper end located at the level of U-shaped rails 22. The upper part 16c extends between a lower end which coincides with the upper end of the middle part 16b and an upper end located above the U-shaped rails 22. The lower part 16a has a first inclination relative to the floor 5a of the frame 5. The middle part 16b has a second inclination relative to the floor 5a that is higher than the first inclination. The upper part 16c has a third inclination relative to the floor 5a that is higher than the second inclination.

Although not limited thereto, such container 3 for carrying articles finds application for delivering articles ordered by different users of a same geographical area, such as a town or a neighborhood of a city. The container 3 is typically a pick-up box.

The container 3 is in the form of a box with a generally parallelepiped shape. The container thus comprises a front face, a rear face, two side faces, a bottom face and a top face 3a.

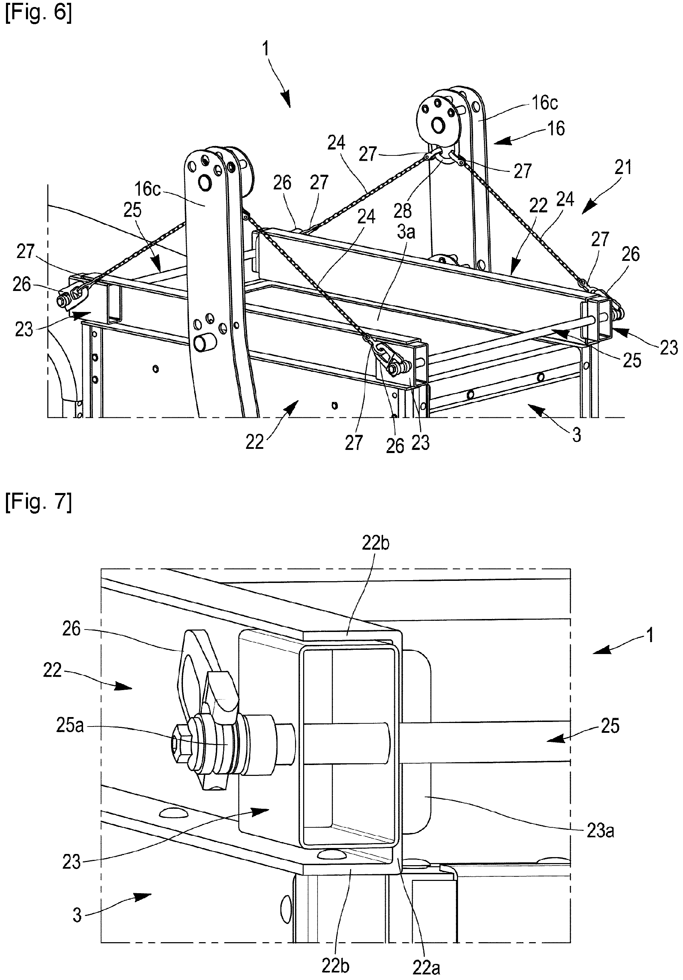

**FIG. 6** is a first detailed view of a fastening system 21 of the cargo bike 1, whereas **FIG. 7** is a second detailed view of the fastening system 21 of the cargo bike 1.

A system 21 for fastening the container 3 to the tilting device 10 is used. The fastening system 21 comprises two U-shaped rails 22 that are located on the top face 3a of the container 3. Each rail 22 has thus a base 22a and two side walls 22b that are orthogonal to the base 22a. A rail 22 is fixed to each side end of the top face 3a of the container 3. In particular, a side wall 22b of the rail 22 is fixed along the top face 3a of the container 3. The two U-shaped rails 22 are positioned so that they are open towards the outside of the cargo bike 1.

Although described above in connection with the first example of the cargo bike 1, the tilting device 10 and the U-shaped rail 22 are the same for the first example and the second example.

Two examples of attaching the container 3 to the tilting device 10 will now be described.

In a first example, the fastening system 21 comprises at each longitudinal end of each U-shaped rail 22 a fastening element 23 housed inside the rail 22. The fastening elements 23 are intended to support the rails 22 in the operational configuration of the tilting device 10. Each upper face of a fastening element 23 is therefore in contact with an upper side wall 22b of a rail 22. Each fastening element 23 is connected via a connecting element 24 to the upper part 16c of a pivoting arm 16.

Thus, a first rail 22 is connected to the upper end 16c of a first pivoting arm 16 by means of two connecting elements 24, including a connecting element 24 connecting the fastening element 23 located at the rear of the first rail to the upper part 16c of the first pivoting arm 16 and a connecting element 24 connecting the fastening element 23 located at the front of the first rail 22 to the upper part 16c of the first pivoting arm 16.

Similarly, a second U-shaped rail 22 is connected to the upper end 16c of a second pivoting arm 16 by means of two connecting elements 24, including a connecting element 24 connecting the fastening element 23 located at the rear of the second rail 16 to the upper part 16c of the second pivoting arm 16 and a connecting element 24 connecting the fastening element 23 located at the front of the second rail 22 to the upper part 16c of the second pivoting arm 16.

Each fastening element 23 can be shaped to match the contours of the U-shaped rail 22. For example, each fastening element 23 can be in the form of a parallelepiped which fits into the U-shaped rail and is extended by a transverse projecting element, for example a rod 25a. In this way, the two fastening elements 23 located at the rear of the rails 22 can be traversed by a rear transverse rod 25 which projects laterally from the two rear fastening elements 23. Similarly, the two fastening elements 23 located at the front of the rails 22 can be traversed by a front transverse rod 25 which projects laterally from the two front fastening elements 23.

Each fastening element 23 is advantageously provided with a transverse wing 23a which acts as a longitudinal stop against the base 22a of the rail 22 against which the fixing element 23 is intended to rest.

Thus, the fastening system 21 includes two fastening elements 23 connected transversely to each other by a transversal rod 25 at the rear end of the rails 22 and two fastening elements 23 connected transversely to each other by a transversal rod 25 at the front end of the rails 22.

Each connecting element 23 advantageously comprises a chain 24 which is connected on the one hand, via for example a first hooking element 27, to one hooking element 26 mounted on an end 25a of a transverse rod 25, and on the other hand, via for example a second hooking element 27, to the upper part 16a of a pivoting arm 16. The second hooking element 27 can be hooked onto a loop 28 (for example an oblong ring) which is freely mounted around a transverse rod of the upper part 16c of the pivoting arm 16.

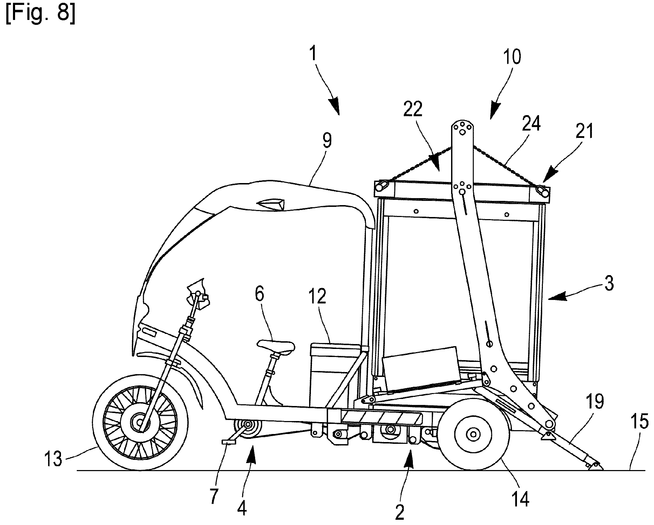

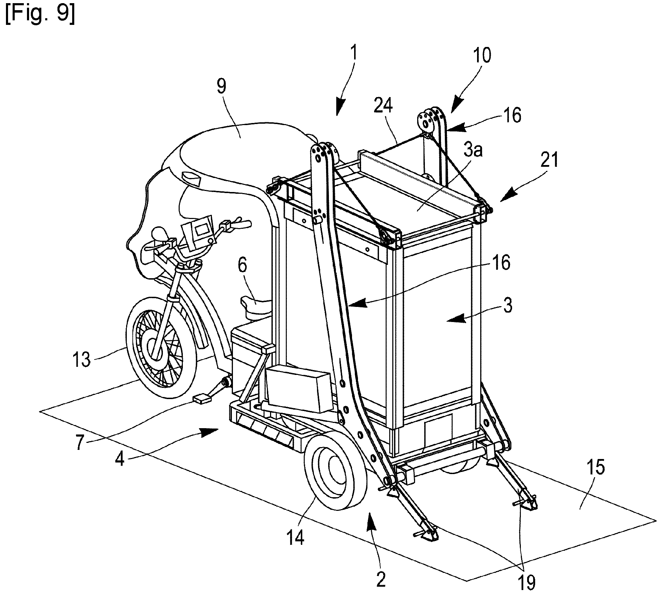

**FIG. 8** is a side view of the cargo bike, during a first step of unloading a container of the cargo bike 1, whereas **FIG. 9** is a perspective view of the cargo bike 1 of **FIG. 8****.**

At the start of unloading, the container 3 is positioned in the pick-up area 4, typically on a floor 5a of the frame 5. Retractable feet 19 can be deployed to rest on the ground 15 and thus help maintain balance of the cargo bike 1 when the container 3 is tipped backwards by the tilting device 10.

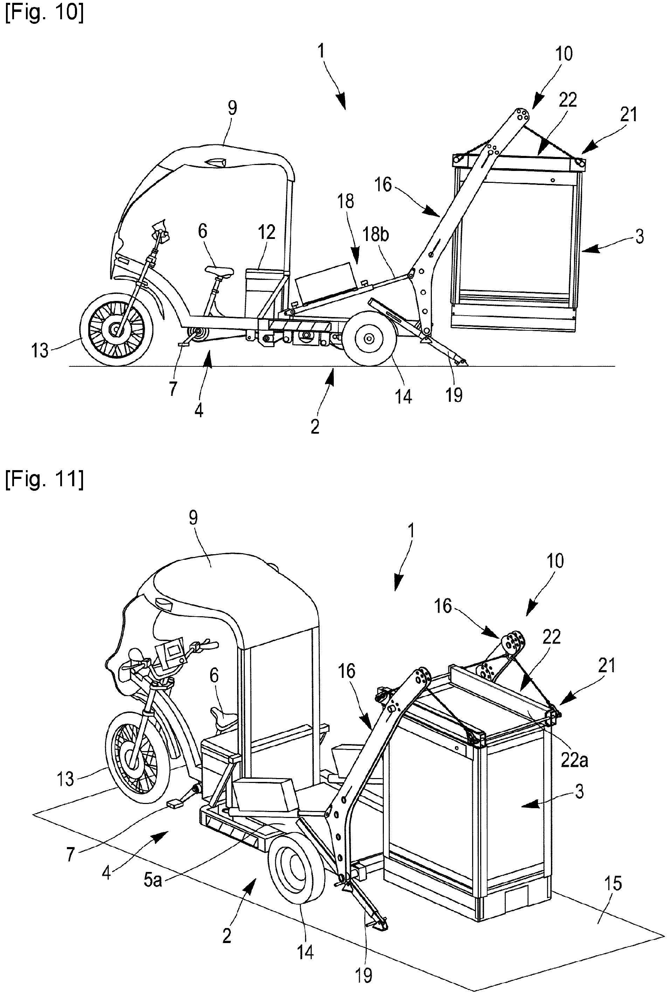

**FIG. 10** is a side view of the cargo bike 1, during a second step of unloading the container 3, whereas **FIG. 11** is a perspective view of the cargo bike 1 of **FIG. 10****.**

During this stage, the container 3 is tipped backwards by the tilting device 10. The actuator 18 rotates the pivoting arms 16 about the axle 17 by actuating the rod 18b of the hydraulic cylinder 18. The container 3 is suspended by the fastening system 21. As the fastening system 21 can pivot freely relative to the tilting device 10 (each loop 28 can pivot freely relative to each arm 16), the container 3 is held in a vertical position during tipping. During the tilt, each hydraulic cylinder 18 rotates around the frame 5 and each pivoting arm 16 rotates around the rod 18b of the hydraulic cylinder 18.

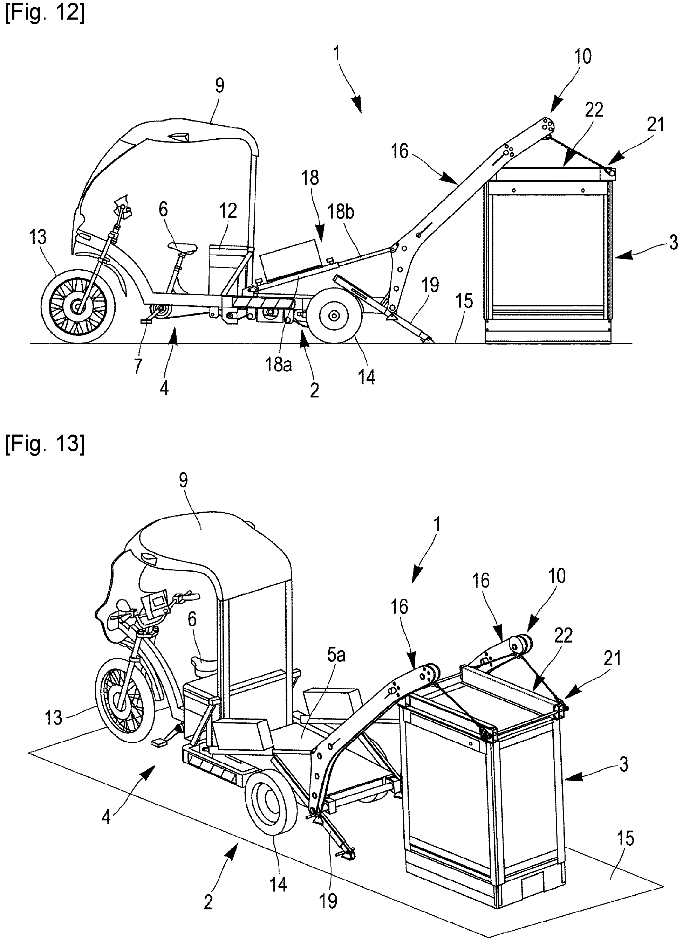

**FIG. 12** is a side view of the cargo bike 1, during a third step of unloading the container 3, whereas **FIG. 13** is a perspective view of the cargo bike 1 of **FIG. 12****.**

At the end of tipping, the container 3 is positioned on the ground 15. The container 3 can then be detached from the tilting device 10. As the container 3 is advantageously provided with wheels, the user simply has to roll the container 3 to its destination.

In the same way, the container 3 can be tipped from its unloaded position to its loaded position by operating the hydraulic cylinder 18 in the opposite direction, the retraction of the rod 18b of the hydraulic cylinder 18 causing the container 3 to tilt forward until the container 3 is positioned on the frame 5.

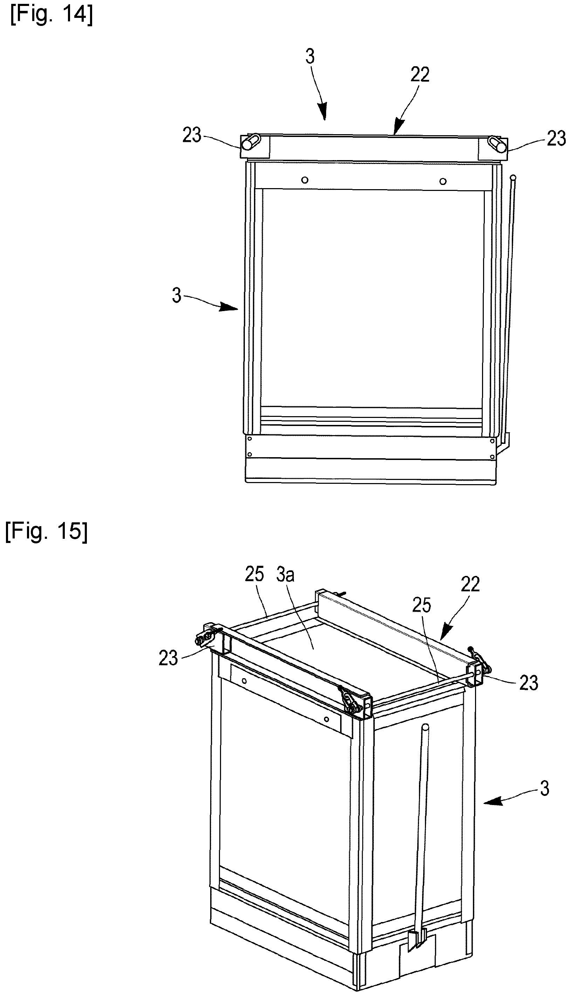

**FIG. 14** is a side view of the container 3, during a first step of mounting the container 3 on the tilting device 10, whereas **FIG. 15** is a perspective view of the container 3 of **FIG. 14****.**

In a first step, the two sets of fastening elements 23 / transverse rod 25 are placed on the rails 22, one set 23, 25 being placed at the front of the rails 22 and one set 23, 25 being placed at the rear of the rails 22, by inserting the fastening elements 25 inside the longitudinal ends of the rails.

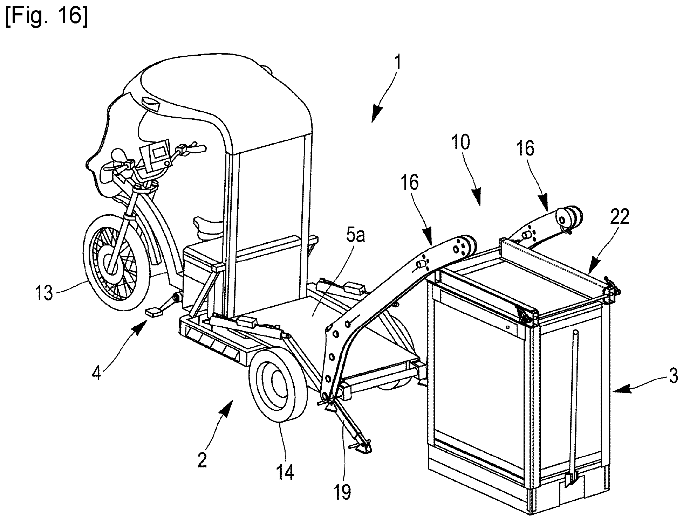

**FIG. 16** is a perspective view of the cargo bike 1, during a second step of mounting the container 3 on the tilting device 10.

During this second step, the cargo bike 1 is moved back and the container 3 is placed between the pivoting arms 16.

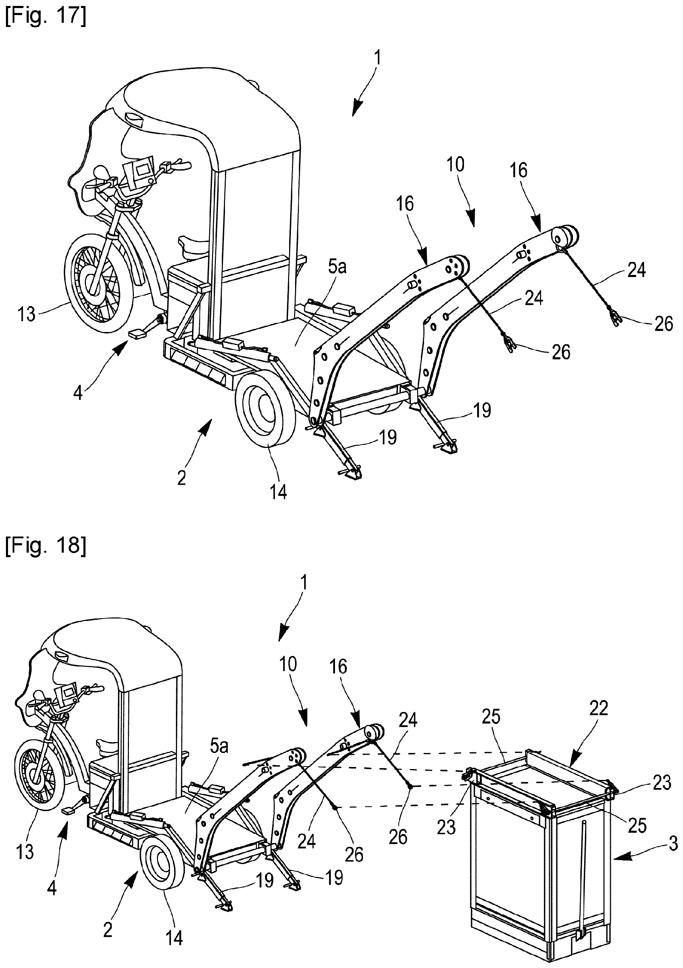

**FIG. 17** is a perspective view of the cargo bike 1, during a third step of mounting the container 1 on the tilting device, during which the connecting elements 24, 26 are arranged on the upper part of the pivoting arms 16.

**FIG. 18** is a perspective view of the cargo bike 1, during a fourth step of mounting the container 3 on the tilting device 10. The connecting elements 24, 26 are then hooked on the ends of the transverse rod 25.

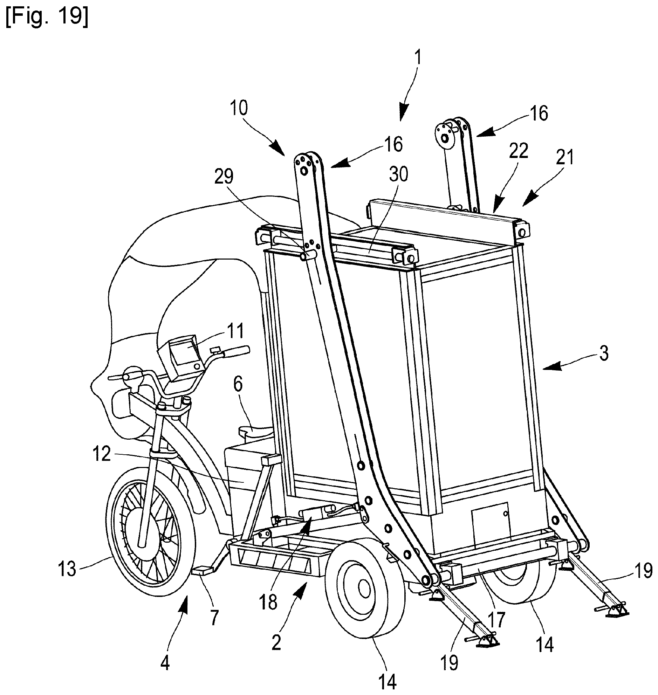

**FIG. 19** is a perspective view of a cargo bike 1 of the invention according to another example.

In this example, the fastening system 21 comprises, for each U-shaped rail 22, a transverse rod 29 projecting from the rail 22 and around which a pivoting arm 16 is rotatably mounted.

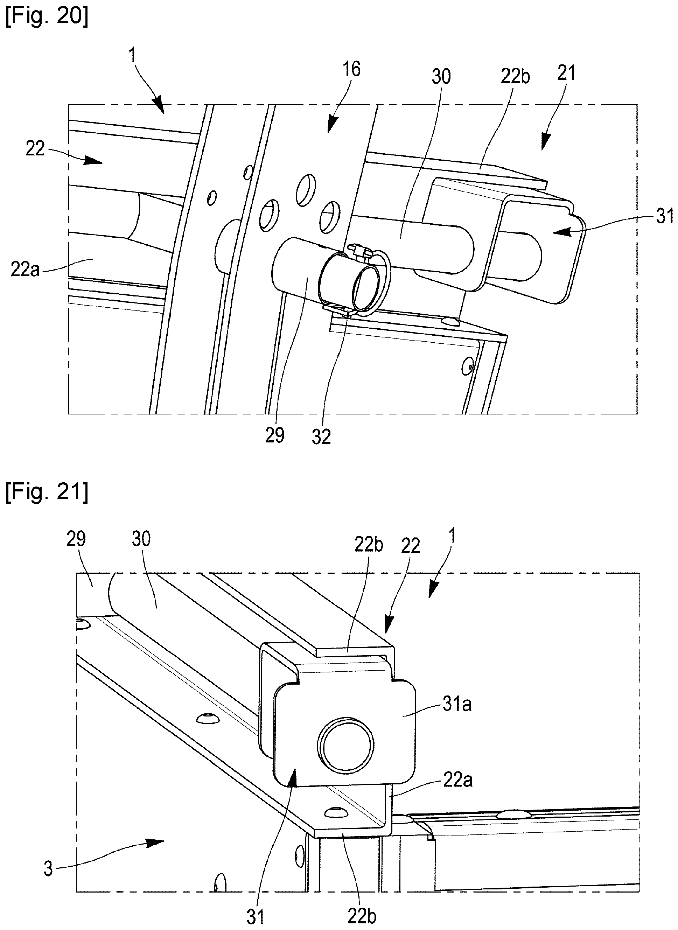

**FIG. 20** is a first detailed view of the fastening system 21 of the cargo bike 1 of **FIG. 19****,** whereas **FIG. 21** is a second detailed view of the fastening system 21 of the cargo bike 1.

The transverse rod 29 can be connected orthogonally to a longitudinal rod 30 which comprises two fastening elements 31 each located at one longitudinal end of the rail 22 and each housing one end of the longitudinal rod 30. The fastening elements 31 are intended to support the rails 22 in the operational configuration of the tilting device 10. Each upper face of a fastening element 31 is therefore in contact with an upper side wall 22b of a rail 22. Each fastening element 31 includes a transverse wing 31 which is intended to act as a longitudinal stop against the base 22a of the U-shaped rail 22.

Each transverse rod 29 is advantageously provided with a pin 32, so as to retain the pivoting arms 16 laterally.

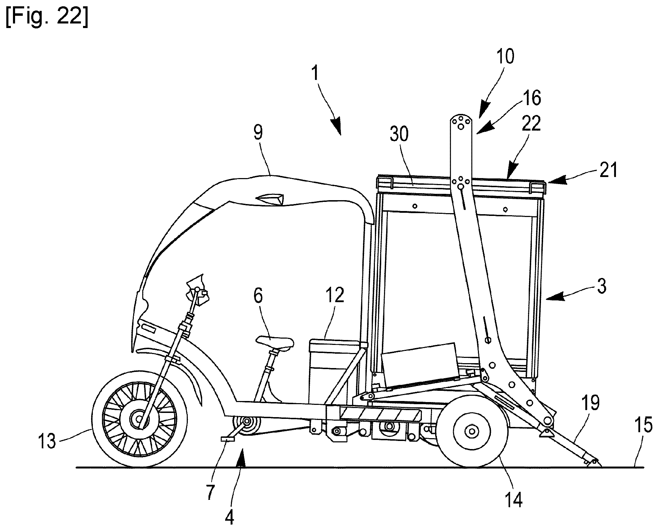

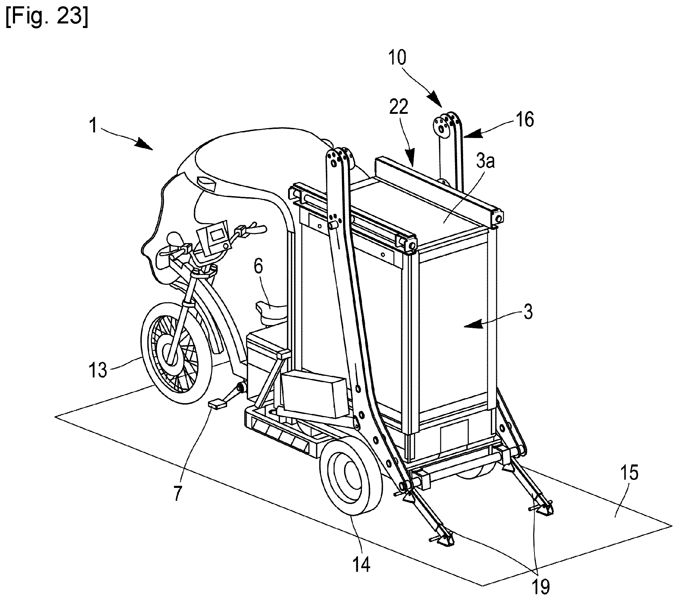

**FIG. 22** is a side view of the cargo bike 1, during a first step of unloading the container 3, whereas **FIG. 23** is a perspective view of the cargo bike 1 of **FIG. 22****.**

At the start of unloading, the container 3 is positioned in the pick-up area 4, typically on a floor 5a of the frame 5. Retractable feet 19 can be deployed to rest on the ground 15 and thus help maintain balance of the cargo bike 1 when the container 3 is tipped backwards by the tilting device 10.

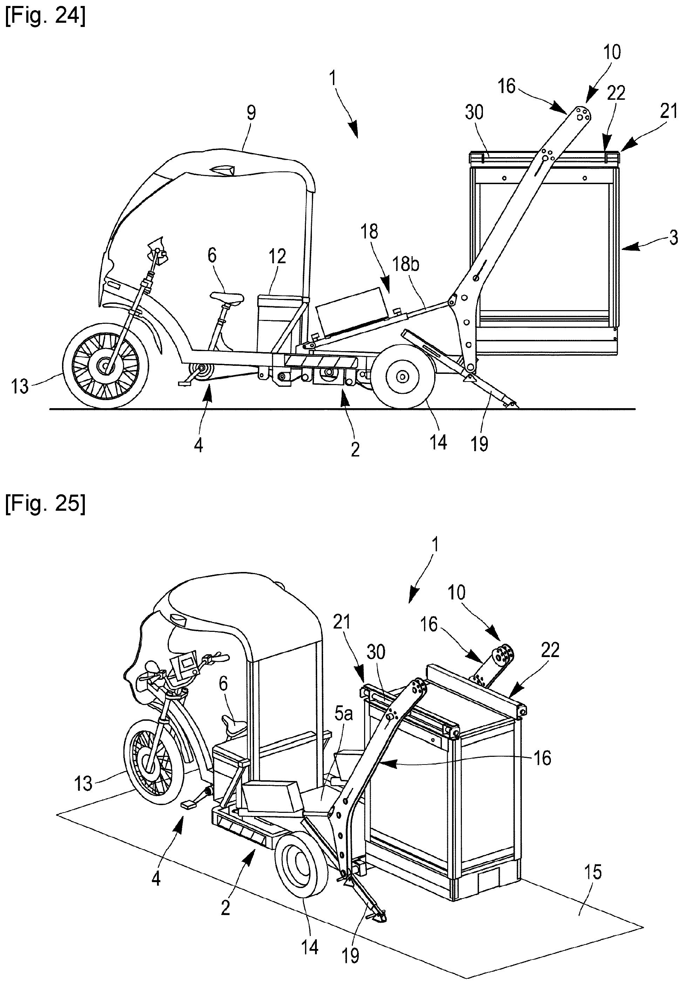

**FIG. 24** is a side view of the cargo bike 1, during a second step of unloading a container 3, whereas **FIG. 25** is a perspective view of the cargo bike of **FIG. 24****.**

During this stage, the container 3 is tipped backwards by the tilting device 10. The actuator 18 rotates the pivoting arms about the axle 17 by actuating the rod 18b of the hydraulic cylinder 18. The container 3 is suspended by the fastening system 21. As the fastening system 21 can pivot freely relative to the tilting device 10 (each transverse rod 29 can pivot freely relative to each arm 16), the container 3 is held in a vertical position during tipping. During the tilt, each hydraulic cylinder 18 rotates around frame 5 and each pivoting arm 16 rotates around the rod 18b of the hydraulic cylinder 18.

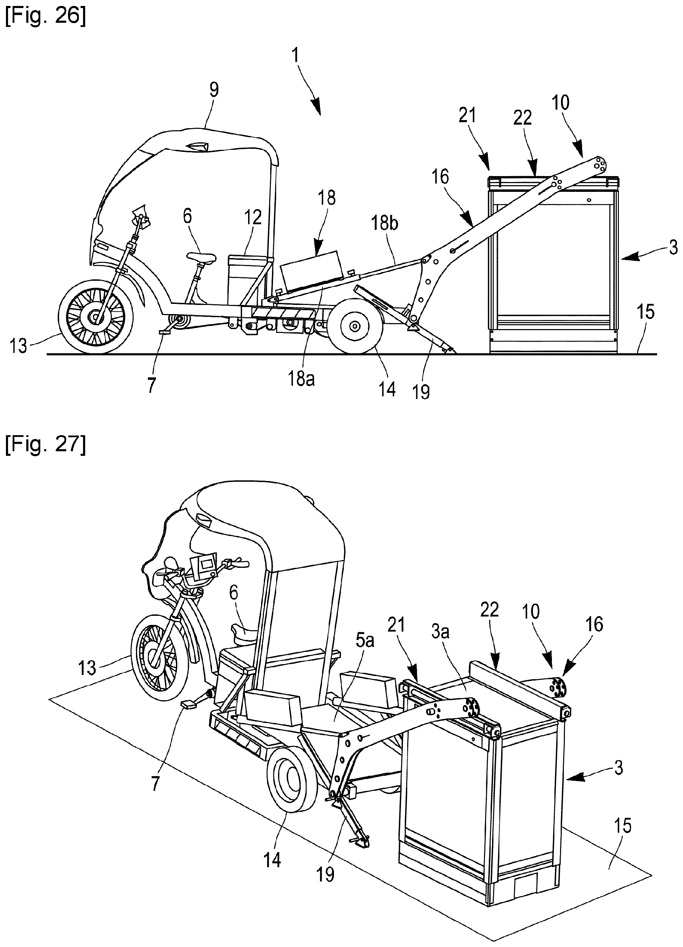

**FIG. 26** is a side view of the cargo bike 1, during a third step of unloading a container 3, whereas **FIG. 27** is a perspective view of the cargo bike of **FIG. 26****.**

At the end of tipping, the container 3 is positioned on the ground 15. The container can then be detached from the tilting device 10. As the container 3 is advantageously provided with wheels, the user simply has to roll the container 3 to its destination.

In the same way, the container 3 can be tipped from its unloaded position to its loaded position by operating the hydraulic cylinder 18 in the opposite direction, the retraction of the rod 18b of the hydraulic cylinder 18 causing the container 3 to tilt forward until the container 3 is positioned on the frame 5.

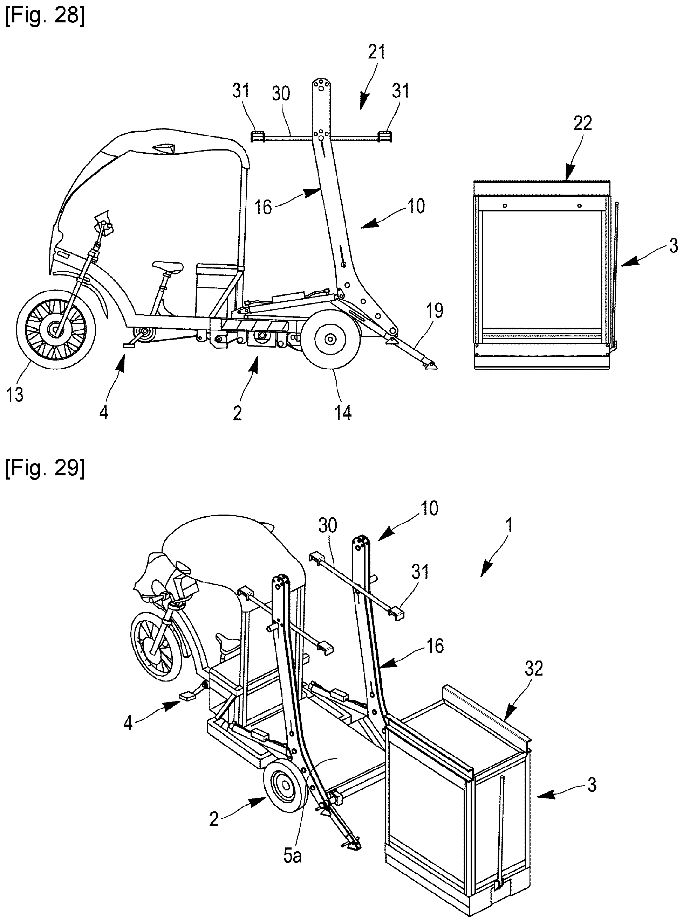

**FIG. 28** is a side view of the cargo bike 1, during a first step of mounting the container 3 on the tilting device 10, whereas **FIG. 29** is a perspective view of the cargo bike 1 of **FIG. 28****.**

At first the container 3 is placed on the back of the cargo bike 1. Each transverse rod 29, connected orthogonally to a longitudinal rod 30 which comprises two fastening elements 31 each surrounding the longitudinal rod 30 at one longitudinal end of the longitudinal rod 30, is rotatably mounted on an upper part of a pivoting arm 16.

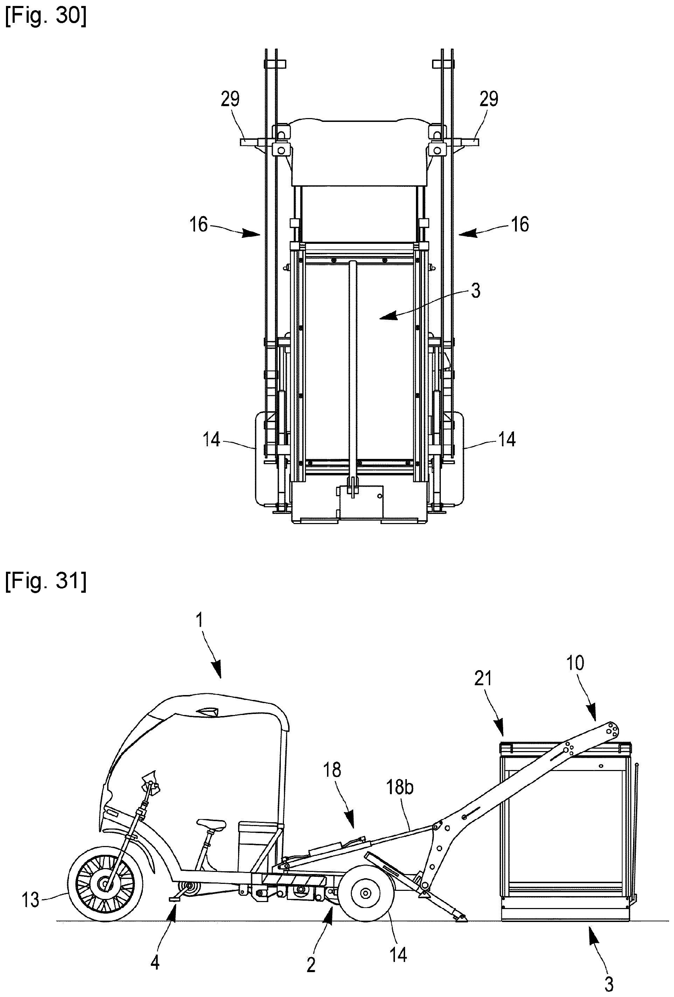

**FIG. 30** is a rear view of the cargo bike 1, during a second step of mounting the container 3 on the tilting device 10.

During this step the cargo bike 1 is moved back to place the container 3 between the two pivoting arms 16.

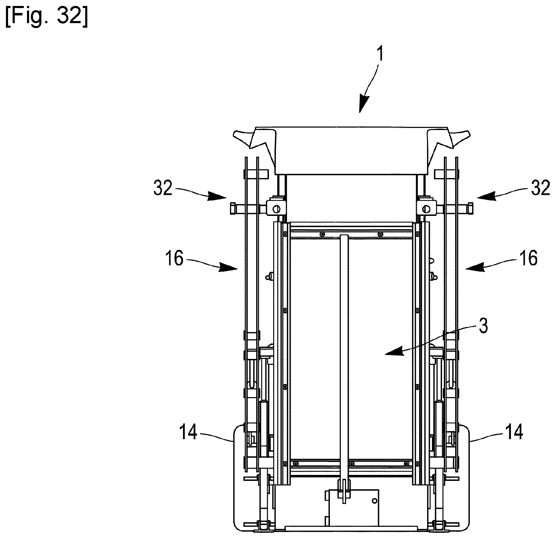

**FIG. 31** is a side view of the cargo bike 1, during a third step of mounting the container 3 on the tilting device 10, whereas **FIG. 32** is a perspective view of the cargo bike 1, during this third step.

Finally, the arms 16 are tilted backwards using the hydraulic cylinder 18, until the longitudinal rods 30 are in front of the U-shaped rail 22. Then the longitudinal rods 30 are pushed inside the rails 22 and the pins 32 are put in the transverse rods 29.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A cargo bike (1), with a longitudinal orientation (X), comprising:
- a driver area (4), which is positioned in front of the cargo bike (1) in regard to the direction of travel of the cargo bike (1),
- a container (3) for carrying articles,
- a pick-up area (2) intended to accommodate said container (3), the pick-up area (2) being positioned to the rear of the driver area (4), the container (3) being operated by a tilting device (10) that is configured to tilt the container (3) longitudinally between a first end position in which the container (3) is located in the pick-up area (2) and a second end position in which the container (3) is located to the rear of the pick-up area (2), and
- a system (21) for fastening the container (3) to the tilting device (10), **characterized by** said fastening system (21) comprising two U-shaped rails (22) arranged at an upper end (3a) of the container (3).

2. The cargo bike (1) of claim 1, wherein the tilting device (10) comprises two pivoting arms (16) located laterally on either side of the cargo bike (1) and mounted so as to rotate relative to a frame (5) of the cargo bike (1), each pivoting arm (16) being driven in rotation by an actuator (18).

3. The cargo bike (1) of claim 2, wherein the pivoting arms (16) are rotatably mounted at the rear of the pick-up area (2) and wherein said actuator (18) is a hydraulic cylinder comprising a cylinder tube (18a) in which moves a piston connected to a rod (18b), the cylinder tube (18a) being mounted so as to rotate relative to the frame (5), the rod (18b) being mounted so as to rotate relative to the pivoting arm (16) driven in rotation by said actuator (18).

4. The cargo bike (1) of any claims 1-3, wherein each U-shaped rail (22) has a base (22a) and two side walls (22b) orthogonal to the base (22a), one rail being (22) attached to each lateral end of the upper end (3a) of the container (3), via a side wall (22b) of the U-shaped rail (22) extending along the upper end (3a) of the container (3), and wherein each U-shaped rail (22) is positioned so that the side walls (22b) of the rail (22) extend from the base (22a) of the rail (22) and towards the exterior of the cargo bike (1).

5. The cargo bike (1) of any claims 1-4, wherein the fastening system (21) comprises at each longitudinal end of each U-shaped rail (22) a fastening element (23) housed inside the rail (22), each fastening element (23) being connected via a connecting element (24) to an upper part (16c) of a pivoting arm (16), the upper part (16c) of the pivoting arm (16) being located above the rail (22).

6. The cargo bike (1) of claim 5, wherein each fastening element (23) comprises a transverse wing (23a), which is intended to act as a longitudinal stop against the base (22a) of a U-shaped rail (22).

7. The cargo bike (1) of claim 5 or 6, wherein the fastening system (21) comprises at a rear end of the U-shaped rails (22) two fastening elements (23) connected transversely to each other by a transverse rod (25) and the fastening system (21) comprises at a front end of the U-shaped rails (22) two fastening elements (23) connected transversely to each other by a transverse rod (25).

8. The cargo bike (1) of any claims 5-7, wherein each connecting element (24) comprises a chain.

9. The cargo bike (1) of claim 8, wherein each chain (24) is connected on the one hand, via a first hooking element (27), to one hooking element (26) mounted on an end (25a) of a transverse rod (25), and on the other hand, via a second hooking element (27), to an upper part (16c) of a pivoting arm (16), the second hooking elements (27) being hooked onto a loop (28) which is freely mounted around a transverse rod of the upper part (16c) of the pivoting arm (16).

10. The cargo bike (1) of any claims 1-4, wherein the fastening system (21) comprises, projecting from each U-shaped rail (22), a transverse rod (29) around which a pivoting arm (16) is rotatably mounted.

11. The cargo bike (1) of claim 10, wherein each transverse rod (29) of the fastening system (21) projects from a longitudinal rod (30) which is supported at each longitudinal end of the rail (22) by two fastening elements (31) housed in the rail (22).

12. The cargo bike (1) of claim 11, wherein each fastening element (31) comprises a transverse wing (31a) which is intended to act as a longitudinal stop against the U-shaped rail (22).

13. The cargo bike of (1) any claims 10-12, wherein each transverse rod (29) is provided with a pin (32).

14. The cargo bike (1) of any claims 1-13, wherein the cargo bike (1) also comprises retractable feet (19) positioned at the rear of the pick-up area (2).

15. The cargo bike (1) of any claims 1-14, wherein the cargo bike (1) is a three-wheeler with one front wheel (13) and two rear wheels (14).

## Patentansprüche

1. Lastenrad (1) mit Längsausrichtung (X), das Folgendes umfasst:
- einen Fahrerbereich (4), der bezüglich der Fahrtrichtung des Lastenrads (1) vor dem Lastenrad (1) positioniert ist,
- einen Container (3) zum Transport von Artikeln,
- einen Aufnahmebereich (2), der dazu vorgesehen ist, den Container (3) aufzunehmen, wobei der Aufnahmebereich (2) an der Rückseite des Fahrerbereichs (4) positioniert ist, wobei der Container (3) von einer Kippvorrichtung (10) betätigt wird, die dazu eingerichtet ist, den Container (3) längs zwischen einer ersten Endposition, in der sich der Container (3) im Aufnahmebereich (2) befindet, und einer zweiten Endposition, in der sich der Container (3) an der Rückseite des Aufnahmebereichs (2) befindet, zu kippen, und
- ein System (21) zur Befestigung des Containers (3) an der Kippvorrichtung (10), **dadurch gekennzeichnet, dass** das Befestigungssystem (21) zwei U-förmige Schienen (22) umfasst, die an einem oberen Ende (3a) des Containers (3) angeordnet sind.

2. Lastenrad (1) nach Anspruch 1, wobei die Kippvorrichtung (10) zwei seitlich an beiden Seiten des Lastenrads (1) angeordnete Schwenkarme (16) umfasst, die relativ zu einem Rahmen (5) des Lastenrads (1) drehbar montiert sind, wobei jeder Schwenkarm (16) von einem Aktuator (18) drehangetrieben wird.

3. Lastenrad (1) nach Anspruch 2, wobei die Schwenkarme (16) drehbar an der Rückseite des Ladebereichs (2) montiert sind und wobei der Aktuator (18) ein Hydraulikzylinder ist, der ein Zylinderrohr (18a) umfasst, in dem sich ein mit einer Stange (18b) verbundener Kolben bewegt, wobei das Zylinderrohr (18a) so montiert ist, dass es sich relativ zu dem Rahmen (5) dreht, während die Stange (18b) so montiert ist, dass sie sich relativ zu dem Schwenkarm (16) dreht, der von dem Aktuator (18) drehangetrieben wird.

4. Lastenrad (1) nach einem der Ansprüche 1 bis 3, wobei jede U-förmige Schiene (22) eine Basis (22a) und zwei Seitenwände (22b) orthogonal zu der Basis (22a) aufweist, wobei eine Schiene (22) über eine Seitenwand (22b) der U-förmigen Schiene (22), die sich entlang des oberen Endes (3a) des Containers (3) erstreckt, an jedem seitlichen Ende des oberen Endes (3a) des Containers (3) befestigt ist, und wobei jede U-förmige Schiene (22) so positioniert ist, dass sich die Seitenwände (22b) der Schiene (22) von der Basis (22a) der Schiene (22) und zu der Außenseite des Lastenrads (1) hin erstrecken.

5. Lastenrad (1) nach einem der Ansprüche 1 bis 4, wobei das Befestigungssystem (21) an jedem Längsende jeder U-förmigen Schiene (22) ein Befestigungselement (23) umfasst, das innerhalb der Schiene (22) untergebracht ist, wobei jedes Befestigungselement (23) über ein Verbindungselement (24) mit einem oberen Teil (16c) eines Schwenkarms (16) verbunden ist, wobei sich der obere Teil (16c) des Schwenkarms (16) oberhalb der Schiene (22) befindet.

6. Lastenrad (1) nach Anspruch 5, wobei jedes Befestigungselement (23) einen Querflügel (23a) umfasst, der dazu vorgesehen ist, als Längsanschlag gegen die Basis (22a) einer U-förmigen Schiene (22) zu fungieren.

7. Lastenrad (1) nach Anspruch 5 oder 6, wobei das Befestigungssystem (21) an einem hinteren Ende der U-förmigen Schienen (22) zwei durch eine Querstange (25) quer zueinander verbundene Befestigungselemente (23) umfasst und das Befestigungssystem (21) an einem vorderen Ende der U-förmigen Schienen (22) zwei durch eine Querstange (25) quer zueinander verbundene Befestigungselemente (23) umfasst.

8. Lastenrad (1) nach einem der Ansprüche 5 bis 7, wobei jedes Verbindungselement (24) eine Kette umfasst.

9. Lastenrad (1) nach Anspruch 8, wobei jede Kette (24) einerseits über ein erstes Hakenelement (27) mit einem an einem Ende (25a) einer Querstange (25) montierten Hakenelement (26) und andererseits über ein zweites Hakenelement (27) mit einem oberen Teil (16c) eines Schwenkarms (16) verbunden ist, wobei die zweiten Hakenelemente (27) an einer Schlaufe (28) eingehängt sind, die frei um eine Querstange des oberen Teils (16c) des Schwenkarms (16) montiert ist.

10. Lastenrad (1) nach einem der Ansprüche 1 bis 4, wobei das Befestigungssystem (21) aus jeder U-förmigen Schiene (22) herausragend eine Querstange (29) umfasst, um die ein Schwenkarm (16) drehbar montiert ist.

11. Lastenrad (1) nach Anspruch 10, wobei jede Querstange (29) des Befestigungssystems (21) aus einer Längsstange (30) herausragt, die an jedem Längsende der Schiene (22) von zwei in der Schiene (22) untergebrachten Befestigungselementen (31) getragen wird.

12. Lastenrad (1) nach Anspruch 11, wobei jedes Befestigungselement (31) einen Querflügel (31a) umfasst, der dazu vorgesehen ist, als Längsanschlag gegen die U-förmige Schiene (22) zu fungieren.

13. Lastenrad nach (1) einem der Ansprüche 10 bis 12, wobei jede Querstange (29) mit einem Stift (32) versehen ist.

14. Lastenrad (1) nach einem der Ansprüche 1 bis 13, wobei das Lastenrad (1) auch einziehbare Füße (19) aufweist, die hinten im Aufnahmebereich (2) positioniert sind.

15. Lastenrad (1) nach einem der Ansprüche 1 bis 14, wobei das Lastenrad (1) ein Dreirad mit einem Vorderrad (13) und zwei Hinterrädern (14) ist.

## Revendications

1. Vélo cargo (1), avec une orientation longitudinale (X), comprenant :
- une zone conducteur (4), qui est positionnée à l'avant du vélo cargo (1) par rapport à la direction de déplacement du vélo cargo (1),
- un conteneur (3) pour transporter des articles,
- une zone de collecte (2) destinée à accueillir ledit conteneur (3), la zone de collecte (2) étant positionnée à l'arrière de la zone conducteur (4), le conteneur (3) étant actionné par un dispositif de basculement (10) qui est configuré pour basculer le conteneur (3) longitudinalement entre une première position d'extrémité dans laquelle le conteneur (3) est situé dans la zone de collecte (2) et une seconde position d'extrémité dans laquelle le conteneur (3) est situé à l'arrière de la zone de collecte (2), et
- un système (21) pour fixer le conteneur (3) au dispositif de basculement (10), **caractérisé en ce que**
ledit système de fixation (21) comprend deux rails en forme de U (22) agencés au niveau d'une extrémité supérieure (3a) du conteneur (3).

2. Vélo cargo (1) de la revendication 1, dans lequel le dispositif de basculement (10) comprend deux bras pivotants (16) situés latéralement de chaque côté du vélo cargo (1) et montés de manière à tourner par rapport à un cadre (5) du vélo cargo (1), chaque bras pivotant (16) étant entraîné en rotation par un actionneur (18).

3. Vélo cargo (1) de la revendication 2, dans lequel les bras pivotants (16) sont montés en rotation à l'arrière de la zone de collecte (2) et dans lequel ledit actionneur (18) est un vérin hydraulique comprenant un tube de vérin (18a) dans lequel se déplace un piston relié à une tige (18b), le tube de vérin (18a) étant monté de manière à tourner par rapport au cadre (5), la tige (18b) étant montée de manière à tourner par rapport au bras pivotant (16) entraîné en rotation par ledit actionneur (18).

4. Vélo cargo (1) de l'une des revendications 1 à 3, dans lequel chaque rail en forme de U (22) a une base (22a) et deux parois latérales (22b) orthogonales à la base (22a), un rail (22) étant fixé à chaque extrémité latérale de l'extrémité supérieure (3a) du conteneur (3), par l'intermédiaire d'une paroi latérale (22b) du rail en forme de U (22) s'étendant le long de l'extrémité supérieure (3a) du conteneur (3), et dans lequel chaque rail en forme de U (22) est positionné de sorte que les parois latérales (22b) du rail (22) s'étendent depuis la base (22a) du rail (22) et vers l'extérieur du vélo cargo (1).

5. Vélo cargo (1) de l'une des revendications 1 à 4, dans lequel le système de fixation (21) comprend, au niveau de chaque extrémité longitudinale de chaque rail en forme de U (22), un élément de fixation (23) logé à l'intérieur du rail (22), chaque élément de fixation (23) étant relié par l'intermédiaire d'un élément de liaison (24) à une partie supérieure (16c) d'un bras pivotant (16), la partie supérieure (16c) du bras pivotant (16) étant située au-dessus du rail (22).

6. Vélo cargo (1) de la revendication 5, dans lequel chaque élément de fixation (23) comprend une aile transversale (23a), qui est destinée à agir comme une butée longitudinale contre la base (22a) d'un rail en forme de U (22).

7. Vélo cargo (1) de la revendication 5 ou 6, dans lequel le système de fixation (21) comprend, au niveau d'une extrémité arrière des rails en forme de U (22) deux éléments de fixation (23) reliés transversalement l'un à l'autre par une tige transversale (25) et le système de fixation (21) comprend, au niveau d'une extrémité avant des rails en forme de U (22), deux éléments de fixation (23) reliés transversalement l'un à l'autre par une tige transversale (25).

8. Vélo cargo (1) de l'une des revendications 5 à 7, dans lequel chaque élément de liaison (24) comprend une chaîne.

9. Vélo cargo (1) de la revendication 8, dans lequel chaque chaîne (24) est reliée d'une part, par l'intermédiaire d'un premier élément d'accrochage (27), à un élément d'accrochage (26) monté sur une extrémité (25a) d'une tige transversale (25), et d'autre part, par l'intermédiaire d'un second élément d'accrochage (27), à une partie supérieure (16c) d'un bras pivotant (16), les seconds éléments d'accrochage (27) étant accrochés à une boucle (28) qui est montée librement autour d'une tige transversale de la partie supérieure (16c) du bras pivotant (16).

10. Vélo cargo (1) de l'une des revendications 1 à 4, dans lequel le système de fixation (21) comprend, en saillie à partir de chaque rail en forme de U (22), une tige transversale (29) autour de laquelle un bras pivotant (16) est monté en rotation.

11. Vélo cargo (1) de la revendication 10, dans lequel chaque tige transversale (29) du système de fixation (21) fait saillie à partir d'une tige longitudinale (30) qui est supportée au niveau de chaque extrémité longitudinale du rail (22) par deux éléments de fixation (31) logés dans le rail (22).

12. Vélo cargo (1) de la revendication 11, dans lequel chaque élément de fixation (31) comprend une aile transversale (31a) qui est destinée à agir comme une butée longitudinale contre le rail en forme de U (22).

13. Vélo cargo (1) de l'une des revendications 10 à 12, dans lequel chaque tige transversale (29) est pourvue d'une goupille (32).

14. Vélo cargo (1) de l'une des revendications 1 à 13, dans lequel le vélo cargo (1) comprend également des pieds rétractables (19) positionnés à l'arrière de la zone de collecte (2).

15. Vélo cargo (1) de l'une des revendications 1 à 14, dans lequel le vélo cargo (1) est un tricycle avec une roue avant (13) et deux roues arrière (14).
